# EUROPÄISCHE PATENTSCHRIFT

(11) **EP 2 157 712 B1**
(45) Veröffentlichungstag und Bekanntmachung des Hinweises auf die Patenterteilung: **30.03.2016**
(21) Anmeldenummer: 09164287.6
(22) Anmeldetag: 01.07.2009
(51) Int. Cl.: H04B 10/114

(54) **IR-Optik für Audio-Übertragung**
IR-lens for audio transmission
Optique IR pour transmission audio

(30) Priorität: 19.08.2008 DE 102008041337
(43) Veröffentlichungstag der Anmeldung: 24.02.2010
(73) Patentinhaber: Robert Bosch GmbH, 70442 Stuttgart (DE)
(72) Erfinder: Grimm, Dietmar, 71696, Moeglingen (DE); Burkhardt, Volker, 71139, Ehningen (DE)

(56) Entgegenhaltungen:
- EP-A- 0 671 613
- EP-A- 1 487 136
- EP-A- 1 855 398
- DE-A1- 19 532 680
- EVONIK INDUSTRIES: 'Broschueren Lieferprogramm-Formmassen', [Online] 01 März 2008, Geschäftsbereich Performance Polymers Prospekt Gefunden im Internet: <URL:http://www.plexiglas-polymers.de/sites /dc/Downloadcenter/Evonik/Product/PLEXIGLAS -Molding-Compounds/de/Broschueren/Lieferpro gramm-Formmassen-de.pdf> [gefunden am 2015-09-25]

## Beschreibung

Die Erfindung betrifft eine Vorrichtung für Fahrzeuge zur Übertragung von optischen Signalen nach dem Oberbegriff des Patentanspruches 1.

### Stand der Technik

Eine Vorrichtung zur Übertragung von optischen Signalen ist beispielsweise aus der Druckschrift DE 197 25 898 A1 bekannt geworden.

Diese Druckschrift offenbart ein Entertainment System für Fahrzeuge, wobei von einer Signalquelle ausgehend Infrarot-Signale über einen Lichtleiter an einen Infrarotsender geleitet werden, welcher die Infrarotsignale an Infrarotempfänger im Fahrzeug sendet.

Es handelt es sich hierbei um einen Infrarotsender, welcher die Infrarotsignale auf unterschiedlich platzierte Infrarotempfänger in einem Fahrzeug sendet.

Dabei weist der Infrarotsender aufgrund des Abstandes zu dem Infrarotempfänger eine entsprechend breite Abstrahlcharakteristik auf.

Aus der DE 19532680 A1 ist ein optisches System mit einer optischen Einheit aus einer Sendeeinheit mit mindestens einem Sendeelement zur Emission von optischer Strahlung, eine Empfangseinheit mit mindestens einem Empfangselement zur Detektion von optischer Strahlung und eine optische Strecke zur Übertragung der optischen Strahlung zwischen Sende- und Empfangseinheit bekannt. In der optischen Strecke ist mindestens ein Optikkörper zur Bündelung und Umlenkung der optischen Strahlung angeordnet, wobei der Optikkörper entweder der Sende- oder der Empfangseinheit zugeordnet ist. Der als Art einer Fresnellinse ausgebildete Optikkörper besitzt eine unstrukturierte Oberflächenseite und eine Vertiefung mit steilen Flanken und großem Neigungswinkel bzw. kleinem Prismenwinkel aufweisender strukturierter Oberflächenseite.

Die Aufgabenstellung zur vorliegenden Erfindung wird darin gesehen, eine Vorrichtung zur Übertragung optischer Signale bereitzustellen, die einen verbesserten Empfang für Empfänger ermöglicht.

Die Aufgabe wird durch die Merkmale des Anspruches 1 gelöst.

Vorteilhafte Erweiterungen der Erfindung sind in den abhängigen Ansprüchen beschrieben.

### Offenbarung der Erfindung

Die Erfindung geht von einer Vorrichtung für Fahrzeuge zur Übertragung von optischen Signalen, beispielsweise Infrarot-Signalen aus, die eine optische Strahlungsquelle umfasst, welche eine vorgegebene Strahlungscharakteristik mit einer Vorzugsrichtung aufweist.

Der Kern der Erfindung liegt darin, dass eine erfindungsgemäße Umlenkstruktur im Strahlungsgang nach der Strahlungsquelle vorgesehen ist, mit welcher eine Umlenkung der Vorzugsrichtung der Strahlungscharakteristik erzielbar ist.

Der Erfindung liegt die Erkenntnis zugrunde, dass aufgrund einer Umlenkung der Vorzugsrichtung eine gezielte Bestrahlung eines optischen Empfängers ausführbar ist.
Gleichzeitig werden weiter außerhalb des Strahlungsfeldes befindliche optische Empfänger nicht angestrahlt werden.
Dies führt zu einer effizienten Bestrahlung des erwünschten Empfängers mit dem optischen Signal.

Durch eine derartige Umlenkung eines optischen Signals kann beispielsweise ein Beifahrer, ausgehend von einer optischen Strahlungsquelle, gezielt bestrahlt werden, um zum Beispiel ein elektronisches Gerät am Beifahrer oder in dessen Umgebung mit Datensignalen zu versorgen.

Eine unerwünschte Bestrahlung des Fahrers mit optischen Signalen, wie beispielsweise Infrarot-Signale, kann somit vermieden werden.

Allgemein sendet eine optische Strahlungsquelle, wie beispielsweise eine Infrarot-Strahlungsquelle, die optischen Signale in einem "Strahlungskegel" an einen Empfänger.

Dabei können alle im Strahlungskegel liegenden Empfänger Signale empfangen. Regelmäßig weisen Strahlungskegel von LED's, die im Infrarotbereich senden, einen Raumwinkel von 10 bis 60 Grad auf.

Eine Reihe von Strahlungsquellen, insbesondere für Infrarot-Licht können auch mit einem deutlich kleineren Strahlungskegel senden.

Empfänger die im Randbereich des Strahlungskegels liegen, können das Signal gegebenenfalls nur mit unerwünschten Qualitätsverlusten empfangen.

Darüber hinaus kann eine unerwünschte Bestrahlung eines gerade noch im Strahlungskegel befindlichen Empfängers als störend empfunden werden.

Durch eine gezielte Ausrichtung der Vorzugsrichtung der Strahlungscharakteristik lassen sich solche Nachteile vermeiden.

In einer vorteilhaften Ausgestaltung der Erfindung ist es vorgesehen, dass die Umlenkstruktur in Bezug auf die Strahlungsrichtung einer Strahlungsquelle eine geneigte Oberfläche aufweist.

Die geneigte Oberfläche kann eine Umlenkung der Strahlungsrichtung eines eintretenden Infrarot-Signals ausführen, wodurch die Vorzugsrichtung der Strahlungscharakteristik geändert wird.

Tritt beispielsweise ein optisches Signal in einem Winkel auf die geneigte Oberfläche, findet eine Brechung des optischen Signals zu oder weg von der Senkrechten auf die geneigte Oberfläche statt, je nachdem welche Brechungsindizes an der Übergangsstelle der geneigten Oberfläche vorliegen.

Vorzugsweise werden die optischen Verhältnisse so gewählt, dass eine Brechung zur Senkrechten auf die geneigte Oberfläche beim Eindringen des Lichtes stattfindet.

Um eine große Fläche für einen Umlenkeffekt zu erreichen, können erfindungsgemäß mehrere geneigte Oberflächen vorgesehen sein. Die Oberflächen können beispielsweise streifenförmig angeordnet sein, wobei zum Beispiel eine Vielzahl von Streifen nebeneinander liegen.

Im Weiteren ist es bevorzugt, dass die Umlenkstruktur eine prismenförmige Oberfläche umfasst.

Mit einer prismaförmigen Oberfläche werden eine Vielzahl von Brechungsflächen ausgebildet.

Vorzugsweise ist ein einzelnes Prisma der prismenförmigen Oberfläche, so ausgebildet, dass beim Eintritt von Infrarot-Signalen auf die Seitenflächen des Prismas eine Richtungsänderung der Strahlungsrichtung stattfinden kann.

Die vorgegebene Vorzugsrichtung des Infrarot-Signals kann mit Bezug auf dessen Eintrittswinkel beim Eintritt in die geneigten Prismenflächen in eine von der Strahlungsquelle abweichende Vorzugsrichtung umgelenkt werden.

Vorteilhafterweise ist die Prismenstruktur für Infrarot-Licht durchlässig.

In einer überdies bevorzugten Ausgestaltung der Erfindung ist es vorgesehen, dass eine optische Einheit zur Bündelung der optischen Signale vorgesehen ist.

Zur Bündelung von optischen Signalen, wie beispielsweise Infrarot-Signale können beispielsweise Fresnel-Linsen bzw. Fresnel-Linsen-Arrays bzw. Spiegelelemente verwendet werden. Aufgrund dieser Bündelung kann eine weitere Konzentration der Signale auf eine erwünschte Stelle stattfinden. Damit lässt sich die Empfangsqualität von insbesondere Infrarot-Signalen weiter verbessern.

Im Weiteren ist erfindungsgemäß die Umlenkstruktur in einem schwarzfarbigen, infrarot durchlässigen Material ausgebildet ist.

Das hier verwendete infrarot durchlässige Material weist den Vorteil auf, dass dieses für sichtbares Licht nicht durchlässig ist.

Dadurch sind Konturen von hinter dem Material angeordneten Elementen nicht sichtbar, wodurch sich große Anwendungsmöglichkeiten bilden, insbesondere vielfältige Designaspekte verwirklicht werden können.

Beispielsweise ist eine derartige Vorrichtung in einem Zentraldisplay eines Fahrzeuges integrierbar.

In einer weiteren vorteilhaften Ausgestaltung der Erfindung weist die Umlenkstruktur in Bezug auf ihre flächige Erstreckung eine geringe Dicke auf.

Die Ausbildung derartiger Umlenkstrukturen mit einer geringen Dicke in Bezug auf ihre flächige Erstreckung hat den Vorteil, dass aufgrund der sich daraus ergebenden geringen Bautiefe einer derartigen Umlenkstruktur diese in einer Vielzahl von Vorrichtungen integrierbar ist, beispielsweise in einem Zentraldisplay in einem Fahrzeug.

Durch eine vorgegebene Materialauswahl ist es ebenfalls denkbar, auf die Umlenkeigenschaften Einfluss zu nehmen. Im Besonderen kann dadurch das Brechungsverhalten so angepasst werden, dass eine Umlenkung im gewünschten Ausmaß stattfindet.

Weitere Merkmale der Erfindung gehen aus der nachfolgenden Figurenbeschreibung hervor.

Dabei zeigen:
- Figur 1:: in einer Draufsicht ein Fahrzeug, in welcher stark schematisiert eine Umlenkung der Vorzugsrichtung eines optischen Signals zwischen Sender und Empfänger veranschaulicht wird;
- Figur 2:: eine schematische Ansicht einer Umlenkstruktur mit deren Strahlungscharakteristik;
- Figur 3:: eine naturgetreue Ansicht einer Umlenkstruktur in einer flächig erstreckten Ausführungsform.

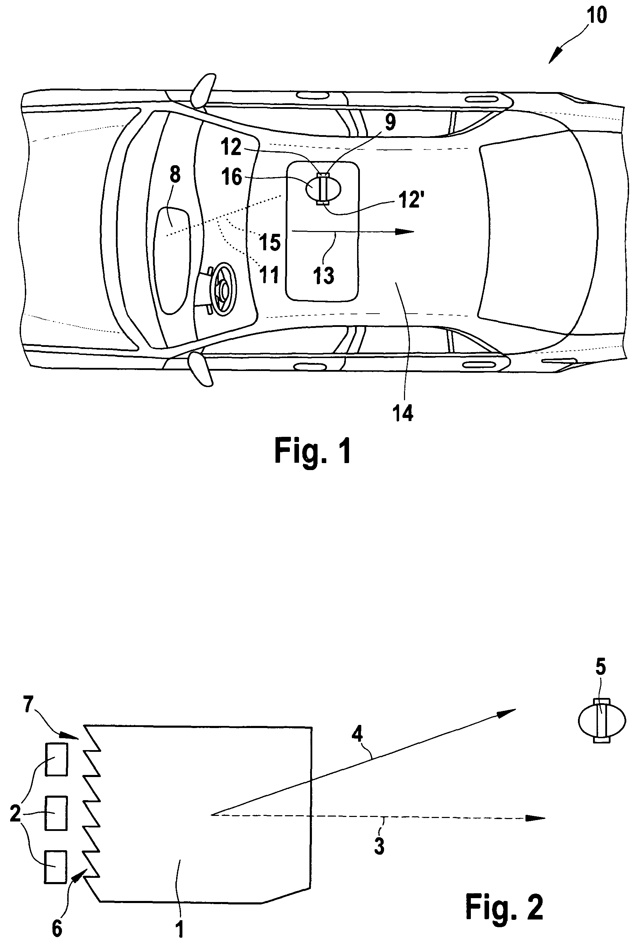

In Figur 1 ist ein Fahrzeug 10 in einer schematisierten Draufsicht dargestellt. Im vorderen Fahrgastraum 14 ist eine optische Strahlungsquelle 2 angeordnet, die beispielsweise Infrarot-Signale 11 abstrahlt.

Aufgrund einer im Strahlungsgang der Strahlungsquelle 2 nachgeordneten Umlenkstruktur 1 (in Figur 1 nicht dargestellt), wird die Vorzugsrichtung der Infrarot- Signale 11 umgelenkt.

Die umgelenkte Vorzugsrichtung 15, welche als gepunktete Gerade dargestellt ist, sendet die Infrarot-Signale 11 auf Infrarot-Empfänger zu Position 9, welche beispielsweise in einem Kopfhörer 12, 12' eines im Fahrzeug 10 sitzenden Fahrgastes 16 integriert sind.

Das Infrarot-Signal 11 mit der umgelenkten Vorzugsrichtung 15 weist damit mit Bezug auf die axiale Längsachse 13 des Fahrzeuges 10 eine deutliche Abweichung auf, wobei ein gezielte Ausrichtung von Infrarot-Signalen auf den Fahrgast 16 ausgeführt wird.

In Figur 2 ist eine schematische Darstellung einer Umlenkstruktur 1 gezeigt, wobei eine Strahlungsquelle 2 Infrarot-Signale 11 in einer ursprünglichen Strahlungsrichtung 3 auf geneigte Oberflächen 7 einer Umlenkstruktur 1 sendet.

Die geneigten Oberflächen 7 sind beispielsweise auf einer prismenförmigen Oberfläche 6 angeordnet, wobei ein reihenförmige Anordnung der geneigten Oberflächen 7 ebenfalls denkbar ist.

Das auf die geneigten Oberflächen 7 auftretende Infrarot-Signal 11 wird aufgrund der Brechungszahl der Umlenkstruktur 1 (Übergang von einem umgebenden Medium in ein optisch dichteres Medium) in eine Strahlungsrichtung 4 umgelenkt, wodurch sich eine Abweichung zur ursprünglichen Strahlungsrichtung einstellt.

Die aus der Umlenkstruktur 1 austretenden Infrarot-Signale 11 werden mit Bezug auf die umgelenkte Strahlungsrichtung 4 auf eine Position 9 von Empfängern 5 gesendet, welche beispielsweise in Kopfhörern 12, 12' integriert sind, die von einem im Fahrgastraum 14 eines Fahrzeuges 10 sitzenden Fahrgastes 16 getragen werden (siehe auch Figur 1).

Zur Verbesserung der Empfangsqualität ist eine Bündelung der Infrarot-Signale 11 unter Verwendung eines Bündelungselementes (nicht dargestellt), beispielsweise einer Fresnel-Linse bzw. eines Spiegels, im Strahlungsgang der umgelenkten Strahlungsrichtung 4 ebenfalls durchführbar.

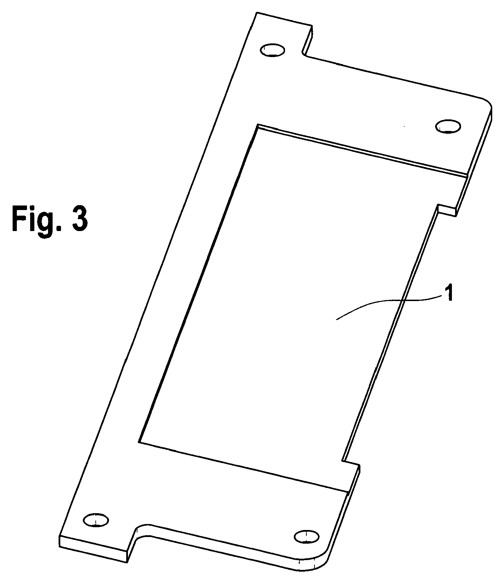

In Figur 3 ist eine naturgetreue Abbildung einer Umlenkstruktur 1 dargestellt, welche in Bezug auf ihre flächige Erstreckung eine relativ geringe Dicke aufweist. Dadurch ist die Umlenkstruktur 1 für einen integrierten Einbau in Vorrichtungen mit relativ geringer Bautiefe, wie beispielsweise in einem Zentraldisplay eines Fahrzeuges 10 gut geeignet.

Zusätzlich ist darauf hinzuweisen, dass die prismenförmige Oberfläche 6 der Umlenkstruktur 1 auf die der Strahlquelle 2 zugeordneten Seite angeordnet werden kann, um somit eine nahezu glatte Oberfläche auf der einem Empfänger 5 zugewandten Oberfläche zu gewährleisten (dies ist in Figur 3 nicht ersichtlich).

Entsprechend der vorgenannten Ausgestaltung, kann die prismenförmige Oberfläche 6 in einer nahezu planaren Flächenstruktur gebildet werden, wodurch eine Vergrößerung des Dickenmaßes in Bezug auf die flächige Erstreckung der Umlenkstruktur 1 vermieden werden kann.

## Patentansprüche

1. Vorrichtung für Fahrzeuge zur Übertragung von optischen Signalen, beispielsweise Infrarot-Signalen, mit einer optischen Strahlungsquelle, die eine vorgegebene Strahlungscharakteristik mit einer Vorzugsrichtung aufweist, mit einer Umlenkstruktur (1) im Strahlungsgang nach einer Strahlungsquelle (2), mit welcher eine Umlenkung der Vorzugsrichtung der Strahlungscharakteristik erzielbar ist, **dadurch gekennzeichnet, dass** die Umlenkstruktur (1) in einem schwarzfarbigen, Infrarot durchlässigen Material ausgebildet ist, dass die Umlenkstruktur (1) in Bezug auf die Strahlungsrichtung der Strahlungsquelle (2) eine geneigte Oberfläche (7) aufweist, dass mehrere geneigte Oberflächen (7) vorgesehen sind und dass die Oberflächen (7) streifenförmig angeordnet sind, wobei eine Vielzahl von Streifen nebeneinander liegen,und dass die Vorrichtung zur Bestrahlung mit optischen Signalen (11) einer einzelnen Position (9) in einem Fahrzeug ausgelegt ist.

2. Vorrichtung nach Anspruch 1, **dadurch gekennzeichnet, dass** die Oberfläche der Umlenkstruktur (1) eine prismaförmige Oberfläche (6) aufweist.

3. Vorrichtung nach einem der vorhergehenden Ansprüche, **dadurch gekennzeichnet, dass** eine optische Einheit (nicht dargestellt) zur Bündelung der optischen Signale (11) vorgesehen ist.

4. Vorrichtung nach einem der vorhergehenden Ansprüche, **dadurch gekennzeichnet, dass** die Strahlungsquelle (2) eine Infrarot-LED umfasst.

5. Vorrichtung nach einem der vorhergehenden Ansprüche, **dadurch gekennzeichnet, dass** die Umlenkstruktur (1) in Bezug auf eine flächige Erstreckung eine geringe Dicke aufweist.

6. Vorrichtung nach einem der vorhergehenden Ansprüche, **dadurch gekennzeichnet, dass** die Umlenkstruktur (1) einen Brechungsindex aufweist, der vom Brechungsindex des angrenzenden Mediums abweicht, mit dem das optische Signal in die Umlenkstruktur eintritt.

7. Verwendung einer Vorrichtung nach einem der vorhergehenden Ansprüche in einem Zentraldisplay eines Fahrzeugs.

## Claims

1. Device for vehicles for transmitting optical signals, for example infrared signals, comprising an optical radiation source having a predefined radiation characteristic with a preferred direction, comprising a deflection structure (1) in the radiation path downstream of a radiation source (2), with which a deflection of the preferred direction of the radiation characteristic is achievable, **characterized in that** the deflection structure (1) is embodied in a black-coloured, infrared-transmissive material, **in that** the deflection structure (1) has an inclined surface (7) relative to the radiation direction of the radiation source (2), **in that** a plurality of inclined surfaces (7) are provided, and **in that** the surfaces (7) are arranged in strip-shaped fashion, a multiplicity of strips lying alongside one another, and **in that** the device is designed for irradiation with optical signals (11) of an individual position (9) in a vehicle.

2. Device according to Claim 1, **characterized in that** the surface of the deflection structure (1) has a prism-shaped surface (6).

3. Device according to either of the preceding claims, **characterized in that** an optical unit (not illustrated) for concentrating the optical signals (11) is provided.

4. Device according to any of the preceding claims, **characterized in that** the radiation source (2) comprises an infrared LED.

5. Device according to any of the preceding claims, **characterized in that** the deflection structure (1) has a small thickness relative to a planar extent.

6. Device according to any of the preceding claims, **characterized in that** the deflection structure (1) has a refractive index that deviates from the refractive index of the adjoining medium with which the optical signal enters the deflection structure.

7. Use of a device according to any of the preceding claims in a central display of a vehicle.

## Revendications

1. Dispositif pour véhicules destiné à la transmission de signaux optiques, par exemple des signaux à infrarouge, comprenant une source de rayonnement optique qui présente une caractéristique de rayonnement prédéfinie avec une direction prédominante, comprenant une structure de déviation (1) dans le trajet du rayonnement après une source de rayonnement (2), avec laquelle peut être obtenue une déviation de la direction prédominante de la caractéristique de rayonnement, **caractérisé en ce que** la structure de déviation (1) est formée dans un matériau de couleur noire laissant passer les infrarouges, **en ce que** la structure de déviation (1) présente une surface inclinée (7) par rapport au sens de rayonnement de la source de rayonnement (2), **en ce qu'**il existe plusieurs surfaces inclinées (7) et **en ce que** les surfaces (7) sont disposées en forme de bandes, une pluralité de bandes étant juxtaposées, et **en ce que** le dispositif est conçu pour irradier avec des signaux optiques (11) une position (9) individuelle dans un véhicule.

2. Dispositif selon la revendication 1, **caractérisé en ce que** la surface de la structure de déviation (1) présente une surface en forme de prisme (6).

3. Dispositif selon l'une des revendications précédentes, **caractérisé en ce qu'**il existe une unité optique (non représentée) servant à focaliser les signaux optiques (11).

4. Dispositif selon l'une des revendications précédentes, **caractérisé en ce que** la source de rayonnement (2) comprend une LED à infrarouge.

5. Dispositif selon l'une des revendications précédentes, **caractérisé en ce que** la structure de déviation (1) présente une faible épaisseur par rapport à une projection à plat.

6. Dispositif selon l'une des revendications précédentes, **caractérisé en ce que** la structure de déviation (1) présente un indice de réfraction qui est différent de l'indice de réfraction du milieu adjacent avec lequel le signal optique pénètre dans la structure de déviation.

7. Utilisation d'un dispositif selon l'une des revendications précédentes dans un afficheur central d'un véhicule.
